# EUROPEAN PATENT APPLICATION

(11) **EP 1 179 766 A2**
(43) Date of publication of application: **13.02.2002**
(21) Application number: 01124628.7
(22) Date of filing: 07.12.1998
(51) Int. Cl.: G06F 3/00, G06K 11/18

(54) **A unit comprising a card read/write device**

(30) Priority: 15.05.1998 DK 18098
(62) Divisional of application: 98958830.6
(71) Applicant: Scard Development Aps., 2720 Vanlose (DK)
(72) Inventor: Gotfredsen, Bjarke, Arroyo Grande, CA 93420 (US)

(57) **Abstract**

A mouse pad comprises at least one card read/write device. The mouse pad is adapted to be coupled to a computer through a wired or wire-less connection so that the connection creates a link between the computer and the card read/write device.

## Description

The invention relates to a unit which comprises a card reader.

It is well-known to use a unit which comprises a card read/write device in connection with computers, so that the device when connected to a computer can transfer information between the computer and a card which is placed in the device.

It is noted that the term card reader is used as a generic term for card read/write devices, e.g. a smart card, in the following.

DE-U-297 17 368 discloses a computer mouse with a housing and an IC card read/write device located inside the housing.

It is known that a card reader may be incorporated in the keyboard of the computer. This solution, however, has the drawback that it is complicated and thereby expensive. This solution has the additional drawback that it is necessary to replace an already operating keyboard by a new keyboard when it is desired to extend an operating computer to also comprise a card reader, and that both keyboards an card reader have to be replaced if one of these parts fails.

This solution has the additional drawback that the user's freedom in the selection of keyboard is limited. The reason is that a user who wants the keyboard to contain a card reader will be forced to select such a one and can be forced to refrain from making further demands on his keyboard. These demands might e.g. be the wish for a special ergonomic design of it.

A card reader may also be incorporated in a separate unit which may be connected to the computer. This solution, however, has the serious drawback that, in addition to being relatively expensive, it also means that extra space is occupied around the computer. Thus, it will frequently involve difficulty in having an extra unit connected while fulfilling the wish for giving it a central position so as to obtain easy access to the card reader.

Additionally, it is possible to incorporate the card reader in the cabinet of the computer itself. This, however, requires mounting by a skilled person, which impedes the installation of a card reader in a computer for a user. The card reader will also take up one of the limited number of slots which are present in the cabinet of the compute, and occupy a slot which can not be used for the mounting of other units in the computer.

Accordingly, an object of the invention is to provide a unit of the type mentioned in the opening paragraph which obviates the drawbacks mentioned in the foregoing.

This is achieved according to the invention by the unit defined in claim 1.

The invention is based on that circumstance that it is well-known to use a mouse pad when using a mouse in connection with the use of a computer. The mouse pad is placed under the mouse to ensure that this operates as intended, by providing a desired friction between the ball of the mouse and the base on which the ball rests so that the ball rolls when the mouse is moved.

When the unit according to the invention is formed by a mouse pad, it is ensured inter alia that, in use, this will be placed at the mouse, and that the read/write unit thus has the desire central position relative to the computer, and that the other drawbacks of units having the prior art read/write device are obviated.

An expedient embodiment is defined in claim 2, said card read/write device being formed by a smart card unit.

The invention will now be described more fully below with reference to the drawing, in which
fig. 1 shows an embodiment of the technical structure of a unit according to the invention, and
fig. 2 shows an embodiment of a unit according to the invention.

The invention relates to devices capable of reading information from cards, devices capable of writing information on cards, as well as devices capable of performing both reading and writing of information on cards.

It is noted that the term card reader is used as a generic term for card read/write devices, e.g. a smart card, in the following. In the embodiment described, the card is a smart card and the card reader is thus a card reader for smart cards. This unit is called smart card read/write device in the following.

The unit, which is also called the product, the mouse pad and the ScardPad, respectively, in the following, has an incorporated smart card read/write unit. The ScardPad is connected to a PC by a cable (RS232 or USB). The upper side of the ScardPad is provided with advertising prints.

It is noted that the ScardPad may be connected to the computer in several ways. For example, the connection may be carried out as a connection of the ScardPAd via a serial port or via a parallel port in the computer.

The connection may also conceivably be performed via a USB port, which is a special type of port that may be used for connecting a plurality of units (typically up to 63 units) to the computer. The connection between the computer and the ScardPad creates a link between the computer an the card reader in the ScardPad so that data may be transferred between the computer and a card which is placed in the card reader.

All PC users, who are to use smart cards in the future in connection with the use of various applications, such as e.g. home banking, internet trade, encryption, etc. will need a smart card read/write device in connection with their PC equipment. Today, the vast majority of PC users are Windows users. and they will therefore have to use a mouse in order to navigate in the application. A ScardPad is therefore a must for a great part of the 92% of all PC users who today use Windows (stated by Microsoft Denmark).

A ScardPad is also one of the peripheral units which is not dependent on other parts of the PC user's configuration, and it is therefore not necessary to replace it when the PC is replaced.

But most importantly, the ScardPAd is a unique "advertisement display pillar", and also so inexpensive that major companies and associations can use it as an advertising gift when new applications are to be introduced with the users. For example, when launching their CashCard, VISA could have included a ScardPad so that their users would immediately have been able to make cash purchases via the Internet, without any security risks. As the introduction was made, the users interested in Internet trading themselves had to invest in one of the smart card read/write units which are commercially available - and these units are relatively expensive.

The ScardPad is constructed like a conventional mouse pad, exept that a smart card read/write unit is embedded (glued) in the foam rubber intermediate layer of the pad. The base has glued thereon a non-skid bottom face, and the top a layer on which the navigation ball of the mouse moves. This top layer is used for advertising (logos, text, pictures, etc.)

The ScardPad is connected to the PC by a cable on which a serial plug (Sub-D-RS232) is mounted. An adapter. e.g., may be supplied together with the pad so that the pad may be connected to a USB plug.

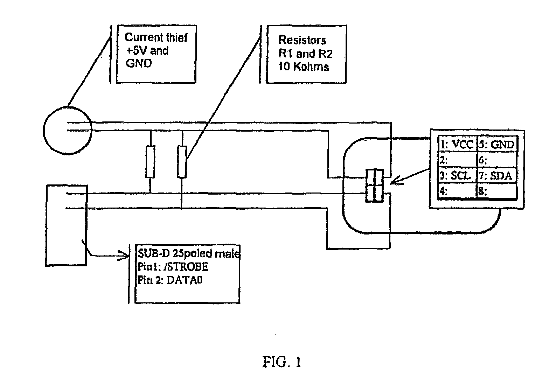

Fig. 1 shows an embodiment of a unit according to the invention which comprises
1 conventional mouse pad, 245 x 205 mm and min 6 mm thick,
1 smart card connctor which complies with the specification of ISO7816 (the connector is commercially available from Farnel amon others - commodity number 7001PM020812A),
1 25-poled SUB-D male plug /Farnell commodity number CF25,150-766),
1 keyboard "power thief". May be bought ready for use, alternatively be made of 2 PS2 keyboard plugs (male and female), with +5V and ground pulled out separetely,
1 PCB printed circuit board having the dimensions (HxLxW) 1.6 x 70 x 58 mm, provided with print paths according to specifications, and
2 10 ohms resistors (R1, R2). (Farnell commodity number 509-280).

The unit may be constructed in the following way:
Connect +5 Volts from
smart card connection 1 (VVC)
The power thief +5 Volts connection
R1
R2

Connect ground / GND from
smart card connection 5 (GND)
The power thief GND connection

Connect Clock from SUB-D plug pin 2 (DATAO)
Smart Card connection 3 (SCL)
R1

Connect Data from
SUB-D plug pin 1 (C/STROBE)
Smart card connection 7 (SDA)
R2

The unit may be connected to a PC (Personal Computer) or any other type of computer in the following way:

The power thief is plugged into the keyboard plug in the PC.

The keyboard plug is plugged into the power thief.

The SUB-D plug is plugged into the printer port of the PC.

The read/write unit may be used for ordinary smart cards with I2C communication (2-conductor serial).

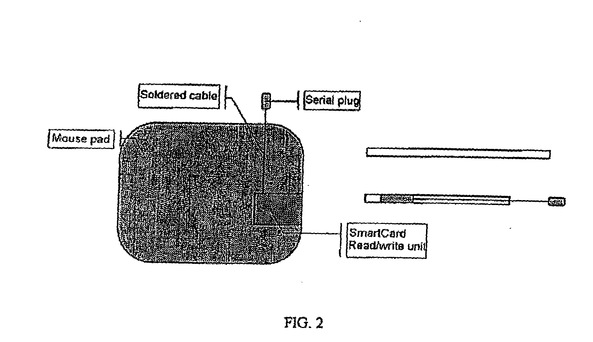

Fig. 2 shows an embodiment of a unit according to the invention. The ScardPad consists of a conventional mousepad, made in three layers, a smart card read/write unit, a cable with a 9-poled SUB-D plug, an adapter and a USB plug. The read/write unit is embedded in the intermediate layer (foam rubber) of the mouse pad, and the cable soldered thereon is passed out to the rear side of the mouse pad in a channel in the foam rubber. The product development phase will show whether the foam rubber layer is to be formed by moulding or by cutting.

A non-skid rubber backing is glued on the base of the pad, and a top layer provided with advertising prints is glued on top. The layer is to give the correct friction against the navigation ball of the mouse.

Although a preferred embodiment of the present invention has been described and shown, the invention is not restriced to it, but may also be embodied in other ways within the subject-matter defined in the following claims. For example, a unit according to the invention may be adapted to be connected to a computer via its parallel port and communicate with the computer via the port. Further, a unit according to the invention may be used in connection with a personal computers, but of course also in connection with other types of computers, as well as computer terminals. Further, a unit according to the invention may be used in connection with other types of cards, such as e.g. cards with magnetic strips.

## Claims

**3.** A mouse pad which comprises at least one card read/write device, **characterized in that** the mouse pad is adapted to be coupled to a computer and further **characterized in that** said at least one card read/write device comprises means for communicating with at least one card selected from the group consisting of:
- Contact Smart Cards
- Contact-less smart cards
- SIM cards
- Memory cards
- Magnetic stripe cards
- Bar code cards
- PC-cards
- Other PCMCIA cards
- "Type of use cards"
- CompactFlash cards
- Smart Media cards
- Identification cards
- Payment cards
- Health care cards
- Citizen cards
- Election cards
- Access cards
- Loyalty cards
- Member cards
- Insurance cards
- Driver's license cards
- CardBus cards
- CardBay cards
- Miniature Cards

**4.** A claim according to claim 3 **characterized in that** said at least one card comprises a computer peripheral device.

**5.** A claim according to claim 3 **characterized in that** said mouse pad is adapted to use with at least one type of mouse selected from the the group consisting of
- Traditional ball mice
- Track ball mice
- Optical mice
- Pen mice
- Wireless mice

**6.** A claim according to claim 3 **characterized in that** said mouse pad is manufactured of at least one material selected from the group consisting of
- Suitable plastic materials
- Suitable rubber material with hard top
- Suitable rubber material with soft top
- Wood
- Card Board
- Suitable rubber foam
- Glass
- Metal
- Leather

**7.** A claim according to claim 3 **characterized in that** said mouse pad comprises a wrist rest.

**8.** A claim according to claim 3 **characterized in that** said mouse pad is coupled to said computer via a wired connection through a port selected from the group consisting of
- USB ports
- Parallel ports
- Serial ports
- PS2 ports

**9.** A claim according to claim 3 **characterized in that** said mouse pad is coupled to said computer via a wire-less connection using a technology selected from the group consisting of
- BlueTooth technology
- Infrared technology
- Radio technology
- Wireless Network technology

**10.** A claim according to claim 3 **characterized in that** said at least one card read/write device is comprised in said mouse pad by means selected from the group consisting of:
- by comprising said card read/write device in a housing integrated with said mouse pad
- by attaching said card read/write device to a side of said mouse pad
- by attaching said card read/write device to a corner of said mouse pad
- by integrating said card read/write device with said mouse pad above said mouse pad.
- by integrating said card read/write device with said mouse pad below said mouse pad.
- by integrating said card read/write device in a device attached to said mouse pad

**11.** A claim according to claim 3 **characterized in that** said card read/write device can be adjusted by a user to any angle, to allow easy insertion of a card into said card read/write device.

**12.** A claim according to claim 3 **characterized in that** said computer is selected from the group consisting of
- PC's
- MACS
- Portable computers
- PDA's
- Network terminals
- Network computers

**13.** A method for coupling at least one card read/write device to a computer, **characterized in that** said at least one card read/write device is comprized in a mouse pad that is coupled to said computer through a wired or a wire-less connection.
